# EUROPEAN PATENT SPECIFICATION

(11) **EP 2 790 245 B1**
(45) Date of publication and mention of the grant of the patent: **14.08.2019**
(21) Application number: 13196066.8
(22) Date of filing: 06.12.2013
(51) Int. Cl.: H01M 2/10, H01M 2/12, H01M 2/20, H01M 2/34, H01M 10/04, H01M 10/12, H01M 10/34

(54) **Rechargeable battery**
Wiederaufladbare Batterie
Batterie rechargeable

(30) Priority: 08.04.2013 US 201361809798 P; 15.10.2013 US 201314054533
(43) Date of publication of application: 15.10.2014
(73) Proprietor: Samsung SDI Co., Ltd., Yongin-si, Gyeonggi-do (KR)
(72) Inventor: Han, Min-Yeol, Yongin-si, Gyeonggi-do (KR); Byun, Sang-Won, Yongin-si, Gyeonggi-do (KR); Yun, Yong-Hee, Yongin-Si, Gyeonggi-do (KR); Yoon, Su-Jin, Cheonan-si, Chungcheongnam-do (KR)
(74) Representative: Gulde & Partner

(56) References cited:
- JP-A- 2000 082 490
- JP-A- 2007 012 485
- KR-A- 20080 058 966
- KR-A-020060 085 443
- US-A- 4 788 112
- US-A1- 2011 143 178

## Description

### FIELD OF THE INVENTION

The present invention relates to a rechargeable battery, and more particularly, to a rechargeable battery including a structure capable of minimizing a residual electrolytic solution in a case.

### DESCRIPTION OF THE RELATED ART

A rechargeable battery is a battery that can be charged and discharged, unlike a primary battery that cannot be charged. A low-capacity rechargeable battery has been used for a small electronic device that can be carried, like a mobile phone, a laptop computer, and a camcorder and a large-capacity battery has been used as a power supply for driving a motor, such as a hybrid vehicle, and the like, or a large-capacity power storage device.

In recent years, a high-output rechargeable battery using a non-aqueous electrolytic solution having a high energy density has been developed. The high-output rechargeable battery is configured as a large-capacity battery module by connecting a plurality of rechargeable batteries in series to be able to be used to drive a motor of a device requiring large power, for example, an electric car, and the like. The rechargeable battery may be formed of a cylinder, a square, and the like.

In order to smoothly operate the rechargeable battery, an appropriate amount of electrolytic solution needs to be filled or injected into an electrode assembly.

Therefore, an amount of the electrolytic solution injected into the rechargeable battery may be more than an amount of the electrolytic solution appropriately filled into an electrode assembly or an electrolytic solution equal to an amount of the electrolytic solution appropriately filled into the electrode assembly may be injected into a case. KR 10200 6008 5443, JP 2007 012485 A, KR 2008 0058966 A disclose battery with an electrolyte absorber to absorb an electrolyte in abnormal conditions. US 4,788,112 discloses a rechargeable storage battery with a gas venting and circuit breaker device which may absorb the entrained electrolyte and may disconnect a positive terminal of the cell. US 2011143178 discloses an elastic body sponge coupled to a contact plate. JP 2000082490 discloses a spacer providing a gap to avoid leakage.

However, when the electrolytic solution is larger than the amount of the electrolytic solution appropriately filled into the electrode assembly, a residual electrolytic solution E that is not contained within the electrode assembly is generated in the case, thereby causing a short circuit in the case.

Further, in order to inject the electrolytic solution equal to the amount of the electrolytic solution appropriately filled into the electrode assembly into the rechargeable battery, there is a need to stop injecting the electrolytic solution and then measure the amount of the electrolytic solution supplied to the rechargeable battery, such that an injection process time of the electrolytic solution may be increased.

### SUMMARY OF THE INVENTION

The present invention has been made in an effort to provide an absorption member capable of absorbing a residual electrolytic solution in a rechargeable battery and shortening an injection process time of the electrolytic solution.

The present invention provides a rechargeable battery, comprising an electrode assembly, a case for mounting the electrode assembly and an electrolyte solution therein, a cap plate for closing an opening of the case facing on one side the inside of the case (25) and on the opposing case facing the exterior of the case (25), wherein an electrolyte solution absorption member is provided inside the case coupled to the cap plate. The electrolyte solution absorption member is coupled to the cap plate on the lower surface of the cap plate facing the electrode assembly. The cap plate comprises a vent hole and the electrolyte solution absorption member comprises a vent hole groove formed at a location corresponding to the location of the vent hole such that the vent hole is exposed within the case.

According to the present invention, the residues of the electrolytic solution in the case can be minimized by the absorption member disposed in the case to absorb the residual electrolytic solution to prevent an internal short circuit from occurring due to the residual electrolytic solution and shortening the operation time for controlling an amount of the residual electrolytic solution in the case, thereby improving the productivity of the rechargeable battery.

The absorption member is provided on the surface of the cap plate facing the electrode assembly.

In this way, the electrolyte solution can be absorbed in a location spaced away from the electrodes reducing the risk of shorts in the case.

Preferably, the electrolyte solution absorption member is attached to the cap plate via an adhesive thereby simplifying the assembly of the battery and the fixation of the electrolyte solution absorption member to the cap plate.

Preferably, the electrolyte solution absorption member comprises or consists of an electrolyte solution absorbing material. I.e., it is the material of the electrolyte solution absorption member which provides the inventive effect and not the shape of the electrolyte solution absorption member. Preferably, an electrolyte solution absorption member comprises a porous film or a fiber fabric. The porous film and the fiber fabric may be formed of at least one of porous materials, and may have a plurality of nano-size openings to absorb and contain an electrolyte solution therein. Specifically, the porous film may be formed of at least one of polyolefin and poly vinylindene fluoride.

The electrolyte solution absorption member is preferably a thin absorption sheet.

The battery may further comprise a first terminal rivet coupled to a first electrode of the electrode assembly and protruding from the inside of the case through the cap plate and the electrolyte solution absorption member may comprise a first groove for passing the first terminal rivet therethrough.

In one embodiment, the rechargeable battery may further comprise a second terminal rivet coupled to a second electrode of the electrode assembly and protruding from the inside of the case through the cap plate and the electrolyte solution absorption member comprise a second groove for passing the second terminal rivet therethrough.

The cap plate may comprise an electrolyte injection port and the electrolyte solution absorption member may comprise an electrolyte injection port groove formed at a location corresponding to the location of the electrolyte injection port.

The rechargeable battery may further comprise an auxiliary electrolyte solution absorption member coupled to at least one side surface of the case at a vertical location above the electrode assembly and below the cap plate.

The auxiliary electrolyte solution absorption member preferably comprises an electrolyte solution absorbing material, even more preferably a similar electrolyte solution absorbing material as the electrolyte solution absorption member.

The auxiliary electrolyte solution absorption member may have the shape of a ring or a shape corresponding to a lateral cross section of the case and fixed or laminated to the interior of the case.

The electrolyte solution absorption member may comprise a flat part and a protruding part protruding in a direction away from the cap plate towards the electrode assembly.

The protruding part may protrude along an edge of the flat part, wherein the flat part is coupled to the cap plate. The protruding part may form a closed curve on the edge of the flat part. Preferably, an inner circumference of the protruding part is angled with respect to the flat part.

### BRIEF DESCRIPTION OF THE DRAWINGS

FIG. 1 is a perspective view illustrating a rechargeable battery according to a first exemplary embodiment of the present invention.
FIG. 2 is a cross-sectional view taken along line II-II of FIG. 1.
FIG. 3 is an exploded perspective view of the rechargeable battery according to the first exemplary embodiment of the present invention.
FIG. 4 is a perspective view illustrating a state in which an absorption member and a cap plate according to the first exemplary embodiment of the present invention are coupled with each other.
FIG. 5 is a cross-sectional view illustrating a state in which a residual electrolytic solution in the rechargeable battery of FIG. 2 is absorbed in the absorption member.
FIG. 6 is an exploded perspective view of a rechargeable battery according to a second exemplary embodiment of the present invention.
FIG. 7 is a cross-sectional view illustrating a state in which a residual electrolytic solution in the rechargeable battery taken along line VII-VII of FIG. 6 is absorbed in an absorption member.
FIG. 8 is an exploded perspective view of a rechargeable battery according to a third exemplary embodiment of the present invention.
FIG. 9 is a cross-sectional view illustrating a state in which a residual electrolytic solution in the rechargeable battery taken along line IX-IX of FIG. 8 is absorbed in an absorption member.
FIG. 10 is a cross-sectional view illustrating a state in which the residual electrolytic solution in the rechargeable battery taken along line IX-IX of FIG. 8 is absorbed in the absorption member.

### DETAILED DESCRIPTION OF THE EMBODIMENTS

Hereinafter, the present invention will be described more fully hereinafter with reference to the accompanying drawings, in which exemplary embodiments of the invention are shown.

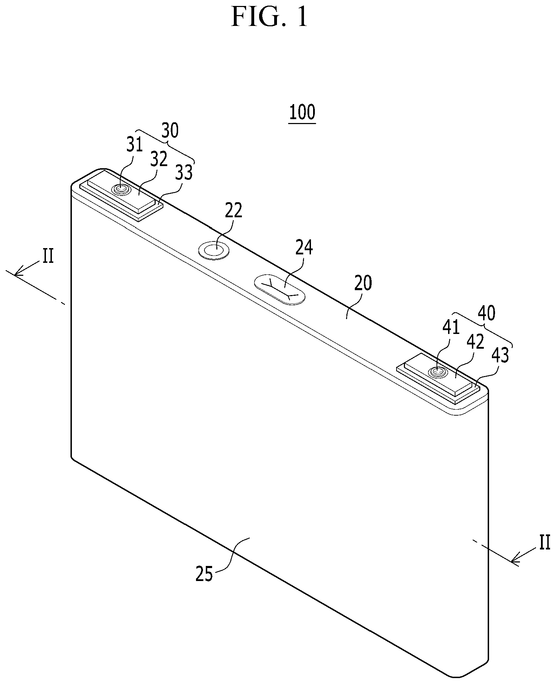

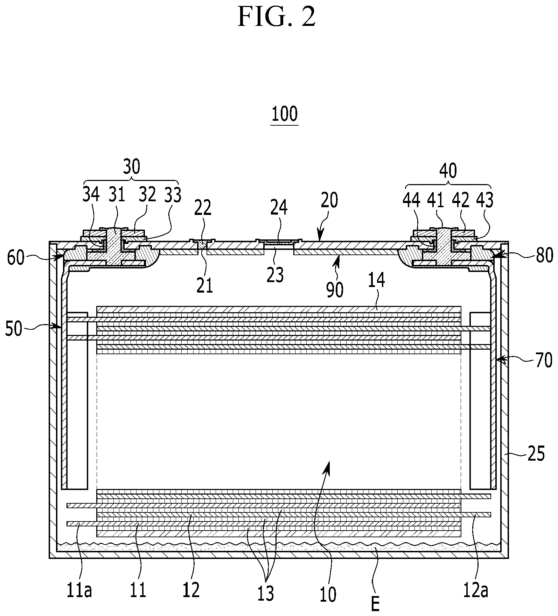

FIG. 1 is a perspective view illustrating a rechargeable battery according to a first exemplary embodiment of the present invention and FIG. 2 is a cross-sectional view taken along line II-II of FIG. 1.

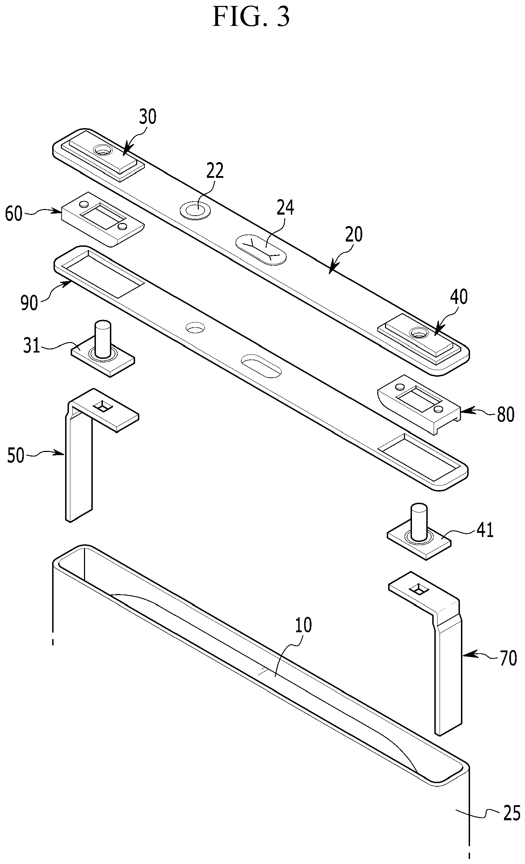

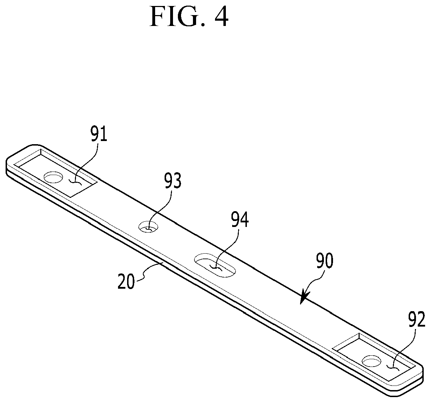

Further, FIG. 3 is an exploded perspective view of the rechargeable battery according to the first exemplary embodiment of the present invention and FIG. 4 is a perspective view illustrating a state in which an absorption member and a cap plate according to the first exemplary embodiment of the present invention are coupled with each other.

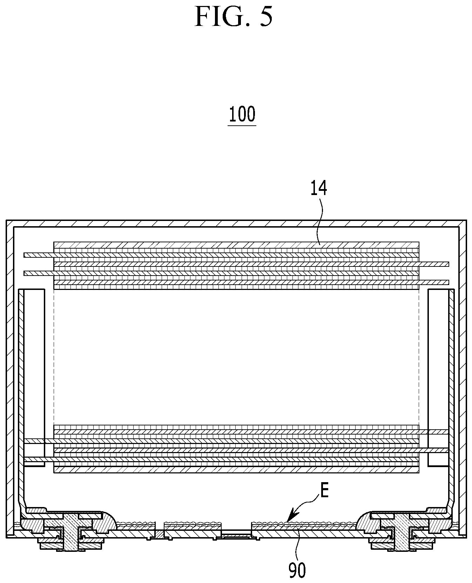

FIG. 5 is a cross-sectional view illustrating a state in which a residual electrolytic solution in the rechargeable battery of FIG. 2 is absorbed in an absorption member.

Referring to FIGS. 1 and 2, a rechargeable battery 100 according to the first exemplary embodiment of the present invention includes an electrode assembly 10, a case 25 in which the electrode assembly 10 is embedded, a first terminal part 30 and a second terminal part 40 that are electrically connected with the electrode assembly 10, a cap plate 20, first and second lower insulating members 60 and 80, and an electrolyte solution absorption member 90, or short "absorption member" 90 that is coupled with the cap plate 20.

The rechargeable battery 100 according to the first exemplary embodiment of the present invention is a lithium ion rechargeable battery and will be described as a squared rechargeable battery, by way of example. However, the exemplary embodiment of the present invention is not limited thereto, but may be applied to a battery, such as a lithium polymer battery, and the like.

The electrode assembly 10 according to the exemplary embodiment of the present invention has a jelly roll form in which the first electrode 11, the second electrode 12, and a separator are wound therearound.

Further, a surface of the electrode assembly 10 according to the exemplary embodiment of the present invention may be coupled with an insulating tape 14 to insulate the electrode assembly 10 from the case 25.

Herein, according to the exemplary embodiment of the present invention, the first electrode 11 is a negative electrode and the second electrode 12 is a positive electrode.

However, the exemplary embodiment of the present invention is not limited thereto, but the first electrode 11 may be used as a positive electrode and the second electrode 12 may be as a negative electrode.

The first electrode 11 is wound to be disposed at an outermost side of the electrode assembly 10 according to the exemplary embodiment of the present invention.

In addition, the first electrode 11 and the second electrode 12 are partitioned into a coated part in which a current collector is coated with an active material and a first electrode uncoated part 11a and a second electrode uncoated part 12a that are each disposed at both sides of the coating part in the jelly roll state without the current collector not being coated with the active material.

The first electrode uncoated part 11a of the electrode assembly 10 is electrically connected with the first terminal part 30 via a first electrode current collecting member 50 and the second electrode uncoated part 12a is electrically connected with the second terminal part 40 via a second electrode current collecting member 70.

Further, the first and second terminal parts 30 and 40 include first and second rivets 31 and 41, first and second terminal plates 32 and 42, a first terminal insulating member 33 that is disposed between the first terminal plate 32 and the cap plate 20, a second connection plate 43 that is disposed between the second terminal plate 42 and the cap plate 20, and first and second gaskets 34 and 44.

Herein, the second terminal plate 42 according to the exemplary embodiment of the present invention is made of a conductive material.

In addition, the cap plate 20 according to the exemplary embodiment of the present invention has a thin panel shape and is made of a conductive material and coupled with an opening of the case 25 to seal the opening.

The cap plate 20 is provided with an electrolyte injection port 21 through which an electrolytic solution is injected into the sealed case 25 and the electrolyte injection port 21 injects the electrolytic solution and then is sealed by a sealing stopper 22.

The cap plate 20 is provided with a vent hole 23 that is provided with a vent plate 24 fractured when an internal pressure of the sealed case 25 is above a predetermined pressure.

The cap plate 20 according to the exemplary embodiment of the present invention may be electrically connected with the second electrode 12 via the second terminal plate 42, the second connection plate 43, and the second electrode current collecting member 70.

The case 25 has a substantially rectangular parallelepiped shape and is made of a conductive material and one surface of the case 25 is provided with an opening through which the electrode assembly 10 is inserted.

In addition, the case 25 according to the exemplary embodiment of the present invention may be electrically connected with the second electrode 12 via the cap plate 20.

However, the exemplary embodiment of the present invention is not limited thereto, but the case may be formed in various shapes, such as a cylindrical shape, a pouch shape, and the like.

Further, the first and second lower insulating members 60 and 80 are disposed to be adjacent to the cap plate 20 within the case 25.

Referring to FIGS. 3 and 4, the absorption member 90 according to the exemplary embodiment of the present invention is coupled with one surface of the cap plate 20 that faces the inside of the case 25.

The absorption member 90 according to the exemplary embodiment of the present invention has a thin plate shape and is made of an absorbing material and an insulating material.

In addition, the absorbing member 90 according to the exemplary embodiment of the present invention includes a first groove 91, a second groove 92, a third groove 93, and a fourth groove 94.

In more detail, the first groove 91 of the absorbing member 90 according to the exemplary embodiment of the present invention is coupled with the first lower insulating member 60 and the second groove 92 is coupled with the second lower insulating member 80.

Further, the third groove or electrolyte injection port groove 93 of the absorbing member 90 according to the exemplary embodiment of the present invention is formed at a place facing the electrolyte injection port 21 so that the electrolyte injection port 21 is exposed within the case 25.

In addition, the fourth groove or vent hole groove 94 of the absorbing member 90 according to the exemplary embodiment of the present invention is formed at a place facing the vent hole 23 so that the vent hole 23 is exposed within the case 25.

Hereinafter, the case in which a residual electrolytic solution E is absorbed in the absorbing member 90 to prevent a short circuit will be described in detail.

FIG. 3 is a cross-sectional view illustrating the state in which the residual electrolytic solution in the rechargeable battery of FIG. 2 is absorbed in the absorption member.

Referring to FIG. 3, the absorption member 90 according to the exemplary embodiment of the present invention may be coupled with one surface of the cap plate 20 facing the electrode assembly 10 to be disposed between the electrode assembly 10 and the cap plate 20.

In order to smoothly operate the electrode assembly 10, an appropriate amount of the electrolytic solution needs to be filled or inserted into the electrode assembly 10.

Therefore, the amount of the electrolytic solution injected into the case 25 may be more than the amount of the electrolytic solution appropriately filled into the electrode assembly 10.

Herein, when the amount of the electrolytic solution injected into the case 25 is more than the amount of the electrolytic solution appropriately filled into the electrode assembly 10, as illustrated in FIG. 2, the residual electrolytic solution E that is not contained within the electrode assembly 10 is generated within the case 25.

Herein, the residual electrolytic solution E may be a factor that causes a short circuit within the case 25.

That is, the first electrode 11 is disposed at an outermost side of the electrode assembly 10 according to the exemplary embodiment of the present invention and the case 25 is electrically connected with the second electrode 12 via the cap plate 20.

Further, the residual electrolytic solution E is disposed between the first electrode 11 and a bottom surface of the case 25.

In this case, the first electrode 11 and the case 25 may keep the state in which the first electrode 11 and the case 25 are not electrically connected with each other by the insulating tape 14, that is, the insulating state.

However, the insulating tape 14 that is coupled with the surface of the electrode assembly 10 may be damaged due to external impact, heat generated from the inside of the case 25, and the like.

Therefore, when the insulating tape 14 is damaged due to external impact, and the like, so that the first electrode 11 is electrically connected with the case 25 via the residual electrolytic solution E that is stagnated in the bottom of the case 25 disposed at a side facing the cap plate 20, a current path is formed between the first electrode 11 and the second electrode to cause a short circuit within the case 25.

The absorption member 90 according to the exemplary embodiment of the present invention may prevent the short circuit from occurring within the case 25 due to the residual electrolyte solution E.

In more detail, as illustrated in FIG. 5 when the case 25 rotates clockwise or counterclockwise so that the cap plate 20 faces a gravity direction (in other words: a normal to the cap plate 20 pointing away from the case 25 is parallel to the direction of gravity), the residual electrolytic solution E remaining in the case 25 is absorbed in the absorption member 90 disposed in the case 25.

In this case, the absorption member 90 according to the exemplary embodiment of the present invention is made of a material that may appropriately absorb the electrolytic solution.

Consequently, according to the exemplary embodiment of the present invention, since the residual electrolytic solution E is absorbed in the absorption member 90, it is possible to prevent a short circuit from occurring within the case 25 by the residual electrolytic solution E even when the insulating tape 14 is damaged.

Further, in order to prevent the residual electrolytic solution E from occurring within the case 25, the electrolytic solution as much as the amount of the electrolytic solution appropriately filled into the electrode assembly 10 may be injected into the case 25.

However, in order to inject the electrolytic solution into the case 25 in the amount of electrolytic solution appropriately filled into the electrode assembly 10, there is a need to stop injecting the electrolytic solution and then measure the amount of the electrolytic solution supplied into the case 25.

Therefore, in order to prevent the residual electrolytic solution E from occurring within the case 25, the injection of the electrolytic solution needs to stop or the injection speed of the electrolytic solution needs to be delayed, such that an injection process time of the electrolytic solution may be increased.

However, according to the exemplary embodiment of the present invention, there is no need to measure the injected amount of the electrolytic solution enough to prevent the residual electrolytic solution E from occurring within the case 25.

That is, according to the exemplary embodiment of the present invention, even though the residual electrolytic solution E is generated due to the supply of the electrolytic solution into the case 25, the residual electrolytic solution E may be removed by the absorption member 90, such that there is no need to measure the injected amount of the electrolytic solution as in the state of the art.

The absorption member is preferably attached to the cap plate via an adhesive Furthermore, the absorption member comprises or consists of an electrolyte solution absorbing material. The electrolyte solution absorption member may comprise a porous film or a fiber fabric. The porous film and the fiber fabric may be formed of at least one of porous materials. They may have a plurality of nano-size openings to absorb and contain an electrolyte solution therein. Specifically, the porous film may be formed of at least one of polyolefin and poly vinylindene fluoride.

Therefore, according to the exemplary embodiment of the present invention, in order to measure the injected amount of the electrolytic solution, there is no need to stop injecting the electrolytic solution or delay the injection speed of the electrolytic solution, such that the injection process time of the electrolytic solution is shortened, thereby improving the productivity of the rechargeable battery.

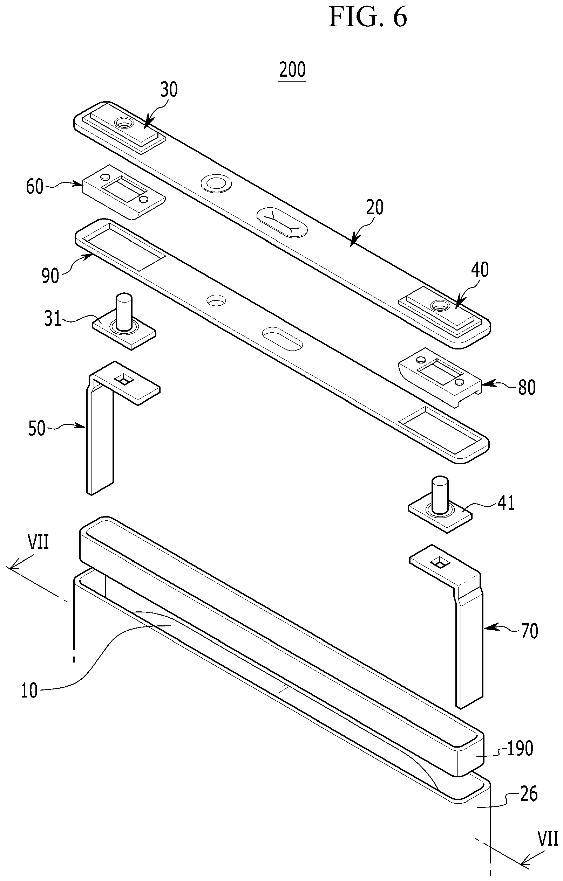

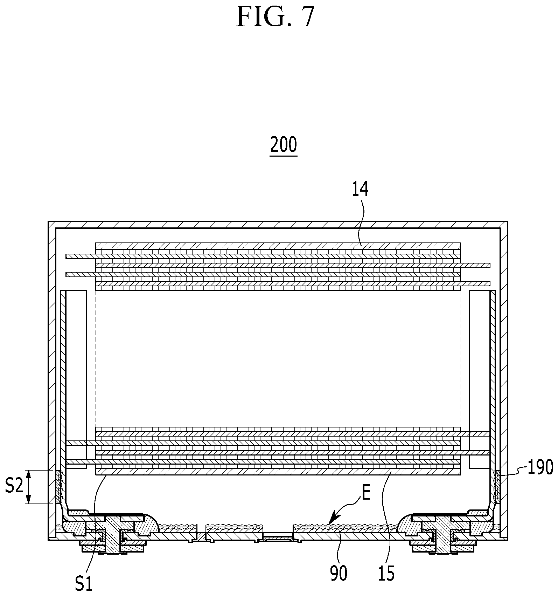

FIG. 6 is an exploded perspective view of a rechargeable battery according to a second exemplary embodiment of the present invention and FIG. 7 is a cross-sectional view illustrating a state in which a residual electrolytic solution in the rechargeable battery taken along line VII-VII of FIG. 6 is absorbed in an absorption member.

Referring to FIGS. 6 and 7, a rechargeable battery 200 according to the exemplary embodiment of the present invention has the same configuration as the rechargeable battery 100 according to the first exemplary embodiment of the present invention, except for an auxiliary absorption member 190.

Therefore, the detailed description of the same components as those of the rechargeable battery 100 according to the first exemplary embodiment of the present invention will be omitted below.

The auxiliary absorption member 190 according to the exemplary embodiment of the present invention is coupled with a side within the case 25.

In more detail, the auxiliary absorption member 190 is coupled with a first portion S2 of the inner side of the case 25 that is disposed above a first or upper surface S1 of the electrode assembly 10 facing the cap plate 20.

The electrolytic solution injected through the electrolyte injection port 21 may be filled up to the first surface S1 of the electrode assembly 10 within the case 25.

Therefore, the electrolytic solution is not absorbed in the auxiliary absorption member 190 coupled with the first portion S2 of the case 25 that is disposed above the first surface S1 of the electrode assembly 10 during the injection of the electrolytic solution.

As illustrated in FIG. 7, when the case 25 rotates clockwise or counterclockwise so that the cap plate 20 faces a gravity direction (in other words: a normal to the cap plate 20 pointing away from the case 25 is parallel to the direction of gravity), the residual electrolytic solution E remaining in the case 25 may be absorbed in the absorption member 90 and the auxiliary absorption member 190 disposed in the case 25.

In this case, when the case 25 rotates clockwise or counterclockwise, the residual electrolytic solution E flows down along a side wall within the case 25.

Therefore, the residual electrolytic solution E is primarily absorbed in the auxiliary absorption member 190 coupled with the first portion S2 of the side wall within the case 25 and the residual electrolytic solution E that is not absorbed in the auxiliary absorption member 190 is absorbed in the absorption member 90.

Consequently, the residual electrolytic solution E within the case 25 may be quickly removed by the auxiliary absorption member 190 according to the exemplary embodiment of the present invention.

Further, according to the exemplary embodiment of the present invention, a large amount of residual electrolytic solution E may be removed by the absorption member 90 and the auxiliary absorption member 190.

Therefore, according to the exemplary embodiment of the present invention, it is possible to prevent the short circuit from occurring within the case 5 due to the residual electrolytic solution E and the injection process time of the electrolytic solution may be shortened, thereby improving the productivity of the rechargeable battery.

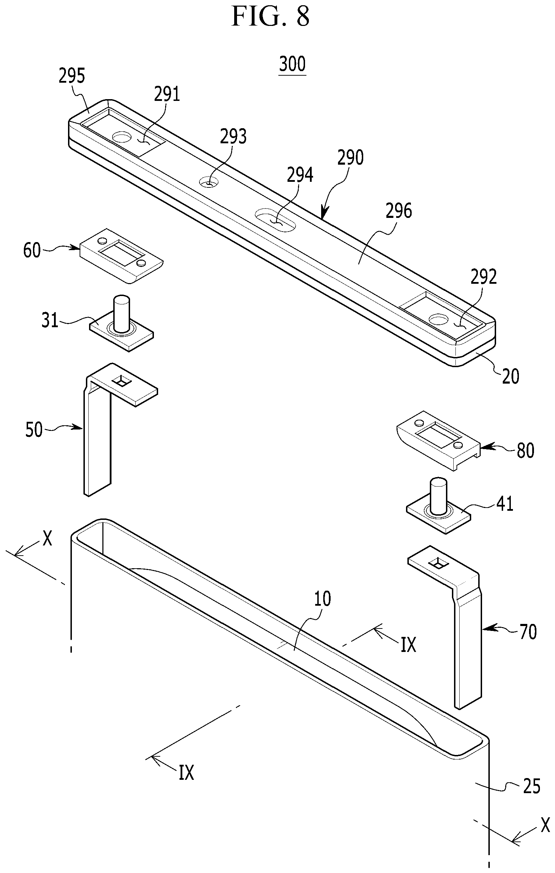

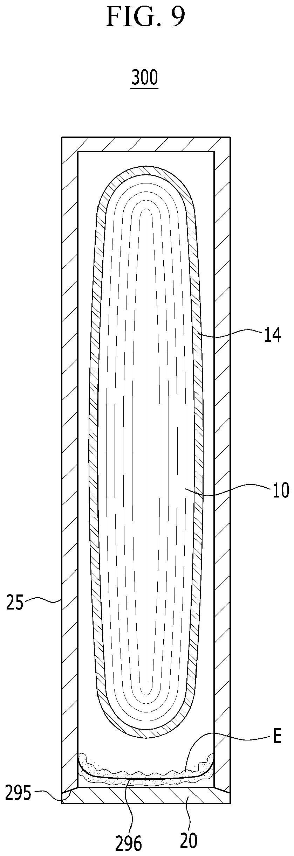

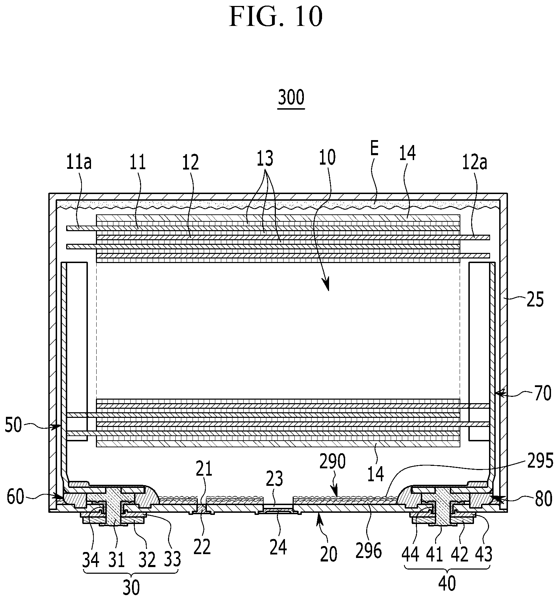

FIG. 8 is an exploded perspective view of a rechargeable battery according to a third exemplary embodiment of the present invention, FIG. 9 is a cross-sectional view illustrating a state in which a residual electrolytic solution in the rechargeable battery taken along line IX-IX of FIG. 8 is absorbed in an absorption member, and FIG. 10 is a cross-sectional view illustrating a state in which the residual electrolytic solution in the rechargeable battery taken along line IX-IX of FIG. 8 is absorbed in the absorption member.

Referring to FIGS. 8 to 10, a rechargeable battery 300 according to the exemplary embodiment of the present invention has the same configuration as the rechargeable battery 100 according to the first exemplary embodiment of the present invention, except for an absorption member 290.

Therefore, the detailed description of the same components as those of the rechargeable battery 100 according to the first exemplary embodiment of the present invention will be omitted below.

Referring to FIG. 8, the absorption member 290 according to the exemplary embodiment of the present invention includes a first groove 291, a second groove 292, a third groove 293, a fourth groove 294, a protruding part 295, and a flat part 296. In order to demonstrate the shape of the absorption member 290, the cap plate 20 together with the absorption member 290 in Fig. 8 is turned upside down. Thus, for assembly of the battery 300, the upper side of the absorption member 290 as shown in Fig. 8 becomes the lower side of the absorption member 290 facing the electrode assembly 10 after assembly.

Herein, the first to fourth grooves 291, 292, 293, and 294 according to the exemplary embodiment of the present invention have the same configuration as the first to fourth grooves 91, 92, 93, and 94 according to the first exemplary embodiment of the present invention, and therefore the detailed description of the first to fourth grooves 291, 292, 293, and 294 according to the exemplary embodiment of the present invention and the detailed description of the coupling relationship with other components will be omitted.

According to the exemplary embodiment of the present invention, the flat part 296 is provided with the first groove 291, the second groove 292, the third groove or electrolyte injection port groove 293, and the fourth groove or vent hole groove 294 and one surface of the flat part 296 is coupled with one surface of the cap plate 20 facing the inside of the case 25.

Further, the protruding part 295 according to the exemplary embodiment of the present invention protrudes along an edge of the flat part 296.

In more detail, the protruding part 295 according to the exemplary embodiment of the present invention protrudes, forming a closed curve along an edge of the flat part 296.

In this case, the protruding part 295 may protrude by forming a predetermined angle with respect to the flat part 296.

According to the exemplary embodiment of the present invention, when the cap plate 20 is coupled with the opening of the case 25, the protruding part 295 coupled with the cap plate 20 faces the inside of the case 25.

In this case, the absorption member 290 is disposed within the case 25 in the state in which the protruding part 295 contacts a part of the side wall within the case 25.

As illustrated in FIGS. 9 and 10, when the case 25 rotates clockwise or counterclockwise so that the cap plate 20 faces a gravity direction (in other words: a normal of the cap plate 20 pointing away from the case 25 is parallel to the direction of gravity), the residual electrolytic solution E remaining in the case 25 may be absorbed in the absorption member 290 disposed in the case 25.

In this case, when the case 25 rotates clockwise or counterclockwise, the residual electrolytic solution E flows down along the side wall within the case 25.

Therefore, the residual electrolytic solution E is primarily absorbed in the protruding part 295 of the absorption member 290 contacting the side wall within the case 25 and the residual electrolytic solution E that is not absorbed in the protruding part 295 is absorbed in the flat part 296 of the absorption member 290.

Consequently, according to the exemplary embodiment of the present invention, the residual electrolytic solution E flowing down along the side wall within the case 25 may be quickly removed by the protruding part 295 of the absorption member 290.

Further, according to the exemplary embodiment of the present invention, a large amount of residual electrolytic solution E may be removed by the protruding part 295 and the flat part 296 of the absorption member 290.

Therefore, according to the exemplary embodiment of the present invention, it is possible to prevent the short circuit from occurring within the case 5 due to the residual electrolytic solution E and the injection process time of the electrolytic solution may be shortened, thereby improving the productivity of the rechargeable battery.

## Claims

1. Rechargeable battery (100) comprising:
an electrode assembly (10),
a case (25) for mounting the electrode assembly (10) and an electrolyte solution therein,
a cap plate (20) for closing an opening of the case (25) facing on one side the inside of the case (25) and on the opposing side facing the exterior of the case (25),
an electrolyte solution absorption member (90) provided inside the case (25) coupled to the cap plate (20),
wherein
the electrolyte solution absorption member (90) is coupled to the cap plate (20) on the lower surface of the cap plate (20) facing the electrode assembly (10), and
the cap plate (20) comprises a vent hole (23) and the electrolyte solution absorption member (90) comprises a vent hole groove (94) formed at a location corresponding to the location of the vent hole (23) such that the vent hole (23) is exposed within the case (25).

2. The rechargeable battery (100) of claim 1, wherein the electrolyte solution absorption member (90) is attached to the cap plate (20) via an adhesive.

3. The rechargeable battery (100) of one of the previous claims, wherein the electrolyte solution absorption member (90) comprises or consists of an electrolyte solution absorbing material.

4. The rechargeable battery (100) of one of the previous claims, wherein the electrolyte solution absorption member (90) is an absorption sheet.

5. The rechargeable battery (100) of one of the previous claims, further comprising a first terminal rivet (31) coupled to a first electrode (11) of the electrode assembly (10) and protruding from the inside of the case (25) through the cap plate (20) and the electrolyte solution absorption member (90) comprises a first groove (91) for passing the first terminal rivet (31) therethrough.

6. The rechargeable battery (100) of claim 4, further comprising a second terminal rivet (41) coupled to a second electrode (12) of the electrode assembly (10) and protruding from the inside of the case (25) through the cap plate (20) and the electrolyte solution absorption member (90) comprise a second groove (92) for passing the second terminal rivet (41) therethrough.

7. The rechargeable battery (100) of one of the previous claims, wherein the cap plate (20) comprises an electrolyte injection port (21) and the electrolyte solution absorption member (90) comprises a electrolyte injection port groove (93) formed at a location corresponding to the location of the electrolyte injection port (21).

8. The rechargeable battery (100) of one of the previous claims, further comprising an auxiliary electrolyte solution absorption member (190) coupled to at least one side surface of the case (25) at a vertical location above the electrode assembly (10) and below the cap plate (20).

9. The rechargeable battery (100) of claim 8, wherein the auxiliary electrolyte solution absorption member (190) comprises an electrolyte solution absorbing material.

10. The rechargeable battery (100) of claim 8 or 9, wherein the auxiliary electrolyte solution absorption member (190) has the shape of a ring or a shape corresponding to a lateral cross section of the case (25) and fixed or laminated to the interior of the case (25).

11. The rechargeable battery (100) of one of the previous claims, wherein the electrolyte solution absorption member (290) comprises a flat part (296) and a protruding part (295) protruding in a direction away from the cap plate (20) towards the electrode assembly (10).

12. The rechargeable battery (100) of claim 11, wherein the protruding part (295) protrudes along an edge of the flat part (296), wherein the flat part (296) is coupled to the cap plate (20).

13. The rechargeable battery (100) of claim 12, wherein the protruding part (295) forms a closed curve on the edge of the flat part (296).

14. The rechargeable battery (100) of claim 13, wherein an inner circumference of the protruding part (295) is angled with respect to the flat part (296).

## Patentansprüche

1. Wiederaufladbare Batterie (100), umfassend:
eine Elektrodenanordnung (10);
ein Gehäuse (25) zum Anbringen der Elektrodenanordnung (10) und einer Elektrolytlösung darin,
eine Deckplatte (20) zum Verschließen einer Öffnung des Gehäuses (25), die auf einer Seite der Innenseite des Gehäuses (25) zugewandt ist und auf der gegenüberliegenden Seite der Außenseite des Gehäuses (25) zugewandt ist,
ein Elektrolytlösungs-Absorptionselement (90), das in dem Gehäuse (25) vorgesehen und an die Deckplatte (20) gekoppelt ist,
wobei das Elektrolytlösungs-Absorptionselement (90) auf der unteren Oberfläche der Deckplatte (20), die der Elektrodenanordnung (10) zugewandt ist, an die Deckplatte (20) gekoppelt ist,
und die Deckplatte (20) ein Luftloch (23) umfasst und das Elektrolytlösungs-Absorptionselement (90) eine Luftlochnut (94) umfasst, die an einer Position ausgebildet ist, die der Position des Luftlochs (23) entspricht, sodass das Luftloch (23) in dem Gehäuse (25) freigelegt ist.

2. Wiederaufladbare Batterie (100) nach Anspruch 1,
wobei das Elektrolytlösungs-Absorptionselement (90) mittels eines Klebstoffes an der Deckplatte (20) angebracht ist.

3. Wiederaufladbare Batterie (100) nach einem der vorangehenden Ansprüche,
wobei das Elektrolytlösungs-Absorptionselement (90) ein Elektrolytlösungs-Absorptionsmaterial umfasst oder daraus besteht.

4. Wiederaufladbare Batterie (100) nach einem der vorangehenden Ansprüche,
wobei das Elektrolytlösungs-Absorptionselement (90) eine Absorptionsschicht ist.

5. Wiederaufladbare Batterie (100) nach einem der vorangehenden Ansprüche, ferner umfassend eine erste Anschlussniete (31), die an eine erste Elektrode (11) der Elektrodenanordnung (10) gekoppelt ist und von der Innenseite des Gehäuses (25) durch die Deckplatte (20) hervorragt und das Elektrolytlösungs-Absorptionselement (90) eine erste Nut (91) zum Durchtreten der ersten Anschlussniete (31) umfasst.

6. Wiederaufladbare Batterie (100) nach Anspruch 4,
ferner umfassend eine zweite Anschlussniete (41), die an eine zweite Elektrode (12) der Elektrodenanordnung (10) gekoppelt ist und von der Innenseite des Gehäuses (25) durch die Deckplatte (20) hervorragt und das Elektrolytlösungs-Absorptionselement (90) eine zweite Nut (92) zum Durchtreten der zweiten Anschlussniete (41) umfasst.

7. Wiederaufladbare Batterie (100) nach einem der vorangehenden Ansprüche,
wobei die Deckplatte (20) eine Elektrolyt-Einspritzöffnung (21) umfasst und das Elektrolytlösungs-Absorptionselement (90) eine Elektrolyt-Einspritzöffnungsnut (93) umfasst, die an einer Position ausgebildet ist, die der Position der Elektrolyt-Einspritzöffnung (21) entspricht.

8. Wiederaufladbare Batterie (100) nach einem der vorangehenden Ansprüche, ferner umfassend ein Elektrolytlösungs-Absorptionshilfselement (190), das an mindestens eine seitliche Oberfläche des Gehäuses (25) in einer vertikalen Position über der Elektrodenanordnung (10) und unter der Deckplatte (20) gekoppelt ist.

9. Wiederaufladbare Batterie (100) nach Anspruch 8,
wobei das Elektrolytlösungs-Absorptionshilfselement (190) ein Elektrolytlösungs-Absorptionsmaterial umfasst.

10. Wiederaufladbare Batterie (100) nach Anspruch 8 oder 9,
wobei das Elektrolytlösungs-Absorptionshilfselement (190) die Form eines Rings oder eine Form, die einem seitlichen Querschnitt des Gehäuses entspricht, aufweist, und an der Innenseite des Gehäuses (25) befestigt oder laminiert ist.

11. Wiederaufladbare Batterie (100) nach einem der vorangehenden Ansprüche,
wobei das Elektrolytlösungs-Absorptionselement (290) einen flachen Teil (296) und einen hervorstehenden Teil (295), der in eine Richtung entgegen der Deckplatte (20) hin zu der Elektrodenanordnung (10) hervorsteht, umfasst.

12. Wiederaufladbare Batterie (100) nach Anspruch 11,
wobei der hervorstehende Teil (295) entlang einer Seite des flachen Teils (296) hervorsteht, wobei der flache Teil (296) an die Deckplatte (20) gekoppelt ist.

13. Wiederaufladbare Batterie (100) nach Anspruch 12,
wobei der hervorstehende Teil (295) eine geschlossene Kurve an der Seite des flachen Teils (296) bildet.

14. Wiederaufladbare Batterie (100) nach Anspruch 13,
wobei ein innerer Umfang des hervorstehenden Teils (296) bezogen auf den flachen Teil (296) angewinkelt ist.

## Revendications

1. Batterie rechargeable (100) comprenant :
un ensemble d'électrodes (10),
un boîtier (25) pour monter l'ensemble d'électrodes (10) et une solution d'électrolyte à l'intérieur de ce dernier,
une plaque formant capuchon (20) pour fermer une ouverture du boîtier (25) orientée d'un côté vers l'intérieur du boîtier (25) et du côté opposé, orientée vers l'extérieur du boîtier (25),
un élément d'absorption de solution d'électrolyte (90) prévu à l'intérieur du boîtier (25) couplé à la plaque formant capuchon (20),
dans laquelle :
l'élément d'absorption de solution d'électrolyte (90) est couplé à la plaque formant capuchon (20) sur la surface inférieure de la plaque formant capuchon (20) faisant face à l'ensemble d'électrodes (10), et
la plaque formant capuchon (20) comprend un trou d'évent (23) et l'élément d'absorption de solution d'électrolyte (90) comprend une rainure de trou d'évent (94) formée à un emplacement correspondant à l'emplacement du trou d'évent (23) de sorte que le trou d'évent (23) est exposé à l'intérieur du boîtier (25).

2. Batterie rechargeable (100) selon la revendication 1, dans laquelle l'élément d'absorption de solution d'électrolyte (90) est fixé à la plaque formant capuchon (20) via un adhésif.

3. Batterie rechargeable (100) selon l'une des revendications précédentes, dans laquelle l'élément d'absorption de solution d'électrolyte (90) comprend ou se compose d'un matériau d'absorption de solution d'électrolyte.

4. Batterie rechargeable (100) selon l'une des revendications précédentes, dans laquelle l'élément d'absorption de solution d'électrolyte (90) est une feuille d'absorption.

5. Batterie rechargeable (100) selon l'une des revendications précédentes, comprenant en outre un premier rivet de borne (31) couplé à une première électrode (11) de l'ensemble d'électrodes (10) et faisant saillie de l'intérieur du boîtier (25) par la plaque formant capuchon (20) et l'élément d'absorption de solution d'électrolyte (90) comprend une première rainure (91) pour y faire passer le premier rivet de borne (31).

6. Batterie rechargeable (100) selon la revendication 4, comprenant en outre un second rivet de borne (41) couplé à une seconde électrode (12) de l'ensemble d'électrodes (10) et faisant saillie de l'intérieur du boîtier (25) par la plaque formant capuchon (20) et l'élément d'absorption de solution d'électrolyte (90) comprend une seconde rainure (92) pour y faire passer le second rivet de borne (41).

7. Batterie rechargeable (100) selon l'une des revendications précédentes, dans laquelle la plaque formant capuchon (20) comprend un orifice d'injection d'électrolyte (21) et l'élément d'absorption de solution d'électrolyte (90) comprend une rainure d'orifice d'injection d'électrolyte (93) formé à un emplacement correspondant à l'emplacement de l'orifice d'injection d'électrolyte (21).

8. Batterie rechargeable (100) selon l'une des revendications précédentes, comprenant en outre un élément d'absorption de solution d'électrolyte auxiliaire (190) couplé à au moins une surface latérale du boîtier (25) dans un emplacement vertical au-dessus de l'ensemble d'électrodes (10) et au-dessous de la plaque formant capuchon (20).

9. Batterie rechargeable (100) selon la revendication 8, dans laquelle l'élément d'absorption de solution d'électrolyte auxiliaire (190) comprend un matériau d'absorption de solution d'électrolyte.

10. Batterie rechargeable (100) selon la revendication 8 ou 9, dans laquelle l'élément d'absorption de solution d'électrolyte auxiliaire (190) a la forme d'un anneau ou une forme correspondant à une section transversale latérale du boîtier (25) et fixé ou déposé en couche sur l'intérieur du boîtier (25).

11. Batterie rechargeable (100) selon l'une des revendications précédentes, dans laquelle l'élément d'absorption de solution d'électrolyte (290) comprend une partie plate (296) et une partie en saillie (295) faisant saillie dans une direction à distance de la plaque de capuchon (20) vers l'ensemble d'électrodes (10).

12. Batterie rechargeable (100) selon la revendication 11, dans laquelle la partie en saillie (295) fait saillie le long d'un bord de la partie plate (296), dans laquelle la partie plate (296) est couplée à la plaque formant capuchon (20).

13. Batterie rechargeable (100) selon la revendication 12, dans laquelle la partie en saillie (295) forme une courbe fermée sur le bord de la partie plate (296).

14. Batterie rechargeable (100) selon la revendication 13, dans laquelle une circonférence interne de la partie en saillie (295) est coudée par rapport à la partie plate (296) .
